# EUROPEAN PATENT APPLICATION

(11) **EP 3 276 918 A1**
(43) Date of publication of application: **31.01.2018**
(21) Application number: 16885453.7
(22) Date of filing: 14.12.2016
(51) Int. Cl.: H04L 29/08

(54) **METHOD FOR SWITCHING DOWNLOADING MODE, AND CONTROL METHOD AND CONTROL SYSTEM THEREFOR**

(30) Priority: 14.06.2016 CN 201610413762
(71) Applicant: Huizhou TCL Mobile Communication Co., Ltd., Hui Zhou Guangdong 516006 (CN)
(72) Inventor: YU, Longji, Guangdong 516006 (CN); CAI, Hai, Guangdong 516006 (CN)
(74) Representative: Petraz, Gilberto Luigi
(86) International application number: PCT/CN2016/109870
(87) International publication number: WO 2017/215215

(57) **Abstract**

A method switching download, a control method thereof and a control system thereof are provided. The terminal simultaneously connects to the LTE and WIFI networks, and the terminal dynamically detects the WIFI signal strength in a real-time manner and reports it to the Small Cell. When the WIFI signal strength is greater than the threshold value, the Small Cell automatically uses the WIFI network to download the file. When the WIFI signal strength is less than the threshold value, the Small Cell automatically uses the LTE network to download the file.

## Description

### BACKGROUND OF THE INVENTION

### 1. FIELD OF THE INVENTION

The present disclosure relates to a wireless communication technology, more particularly, to a method of switching download mode, a control method thereof and a control system thereof.

### 2. DESCRIPTION OF THE RELATED ART

Nowadays, with the popularity of smart phones, the demand for downloading files by using smart phones is increasingly greater and the frequency of using smart phones to download files is increasingly higher, for example, downloading audio files from music website, downloading video files from video sites, downloading the clients from application (app) markets, downloading files from skydrives, downloading attachments from mobile E-mail systems, and so on. In most cases, users select a long term evolution (LTE) network or a wireless-fidelity (WIFI) network to download files from HTTP servers.

In the practical application scenarios, when the selected LTE network or WIFI network has poor signals, users usually need to wait a longer time to complete the download, especially when the file is larger. The download speed is very low, and time is wasted. Therefore, there is a need to make improvements to the prior art.

### SUMMARY OF THE INVENTION

The present disclosure provides a method of switching download mode, a control method thereof and a control system thereof to resolve the technical problem that the download speed is very low and time is wasted when signals of LTE network or WIFI network are poor in the prior art file download mode of the terminal.

In order to resolve the above technical problems, the technical solution adopted by the present disclosure is as follows:

In one aspect, a method of switching download mode applied to a terminal is provided. The method includes: establishing an LTE connection with a Small Cell and connecting a WIFI network through the Small Cell by the terminal when the terminal downloads a file, wherein the terminal simultaneously opens LTE and WIFI interfaces; detecting a WIFI signal strength in a real-time manner and reporting the WIFI signal strength to the Small Cell; and receiving a file download mode from the Small Cell, wherein the file download mode of the terminal is switched according to the WIFI signal strength and comprises an LET download and a WIFI download.

Preferably, establishing the LTE connection with the Small Cell and connecting the WIFI network through the Small Cell by the terminal when the terminal downloads the file comprises: connecting an LTE network and establishing LTE UDP communication with the Small Cell through a UDP data gram socket by the terminal when downloading the file;
sending a WIFI AP to the terminal by the Small Cell; and establishing a WIFI connection with the WIFI AP by the terminal.

Preferably, connecting the LTE network and establishing the LTE UDP communication with the Small Cell through the UDP data gram socket by the terminal when downloading the file comprises:
connecting the LTE network and sending a download request to a server through the LTE network by the terminal when the terminal downloads the file; and receiving a response message of the download request from the server and establishing the LTE UDP communication with the Small Cell through the UDP data gram socket by the terminal.

Preferably, detecting the WIFI signal strength in a real-time manner and reporting the WIFI signal strength to the Small Cell comprises: detecting a WIFI signal in an environment where the terminal is located in a real-time manner and sending the WIFI signal strength to the Small Cell through the LTE UDP communication by the terminal.

Preferably, the file download mode of the terminal being switched according to the WIFI signal strength comprises: comparing the WIFI signal strength reported by the terminal with a predetermined threshold value; using WIFI communication to download the file when the WIFI signal strength is greater than the predetermined threshold value; and using LTE communication to download the file when the WIFI signal strength is less than or equal to the predetermined threshold value.

Preferably, after the file download mode of the terminal is switched according to the WIFI signal strength, the method further comprises: reading the file downloaded through the LTE communication and the file downloaded through the WIFI communication in a real-time manner, and the two being combined to complete the download of the file.

Preferably, the terminal calling to connect to the high priority LTE so as to keep the LTE and WIFI interfaces open simultaneously comprises: calling Android system to connect to the high priority LTE at a predetermined time interval by the terminal so as to keep the LTE and WIFI interfaces open simultaneously. The predetermined time interval is less than 60 seconds.

In another aspect of the embodiment of the present disclosure, a control method of switching download mode applied to a Small Cell is provided. The method includes: opening LTE and WIFI interfaces when a terminal downloads a file, the Small Cell establishing an LTE connection with the terminal to allow the terminal to connect to a WIFI network through the Small Cell; receiving a WIFI signal strength reported by the terminal by the Small Cell; and switching a file download mode of the terminal by the Small Cell according to the WIFI signal strength, wherein the file download mode comprises an LTE download and a WIFI download.

Preferably, opening the LTE and WIFI interfaces when the terminal downloads the file, the Small Cell establishing the LTE connection with the terminal to allow the terminal to connect to the WIFI network through the Small Cell comprises: receiving a UDP data gram socket of the terminal and establishing LTE UDP communication with the terminal by the Small Cell when the terminal downloads the file; and sending a WIFI AP to the terminal by the Small Cell to allow the terminal to establish a WIFI connection with the WIFI AP.

Preferably, receiving the UDP data gram socket of the terminal and establishing the LTE UDP communication with the terminal by the Small Cell when the terminal downloads the file comprises: receiving a download request from the terminal and sending a response message by a server; receiving the response message and establishing the LTE UDP communication with the Small Cell through the UDP data gram socket by the terminal.

Preferably, receiving the WIFI signal strength reported by the terminal by the Small Cell comprises: receiving the WIFI signal strength of the terminal by the Small Cell through the LTE UDP communication.

Preferably, switching the file download mode of the terminal by the Small Cell according to the WIFI signal strength comprises: receiving the WIFI signal strength reported by the terminal and comparing the WIFI signal strength with a predetermined threshold value by the Small Cell; using WIFI communication to download the file when the WIFI signal strength is greater than the predetermined threshold value; and using LTE communication to download the file when the WIFI signal strength is less than or equal to the predetermined threshold value.

Preferably, after the file download mode of the terminal is switched by the Small Cell according to the WIFI signal strength, the method further comprises: reading the file downloaded through the LTE communication and the file downloaded through the WIFI communication by the terminal in a real-time manner, and the two being combined to complete the download of the file.

Preferably, simultaneously opening the LTE and WIFI interfaces by the terminal comprises: calling to connect to a high priority LTE at a predetermined time interval by the terminal so as to keep the LTE and WIFI interfaces to open simultaneously, wherein the predetermined time interval is less than 60 seconds.

In another aspect of the embodiment of the present disclosure, a control system of controlling download switch comprises a terminal and a Small Cell. The terminal establishes an LTE connection with the Small Cell when the terminal downloads a file, and connects a WIFI network through the Small Cell, and detects a WIFI signal strength in a real-time manner and reports the WIFI signal strength to the Small Cell. The terminal simultaneously opens LTE and WIFI interfaces. The Small Cell is configured to switch a file download mode of the terminal according to the WIFI signal strength. The file download mode comprises downloading through the LTE, and downloading through the WIFI.

Preferably, the terminal comprises an establishing module, configured to establish the LTE connection with the Small Cell and to connect the WIFI network through the Small Cell, when the terminal downloads a file; and a detection module, configured to detect the WIFI signal strength and report the WIFI signal strength to the Small Cell.

Preferably, the terminal further comprises a comparing module, configured to receive the WIFI signal strength reported by the terminal, and compare the WIFI signal strength with a predetermined threshold value; and a switch module, configured to use WIFI communication to download the file when the WIFI signal strength is greater than the predetermined threshold value, and to use LTE communication to download the file when the WIFI signal strength is less than or equal to the predetermined threshold value.

Preferably, the terminal further comprises a calling module, configured to call to connect to a high priority LTE at a predetermined time interval so as to keep LTE and WIFI interfaces open simultaneously. The predetermined time interval is less than 60 seconds.

Preferably, the terminal further comprises a combining module, configured to combine the downloaded files, which are downloaded through the LTE communication and downloaded through the WIFI communication.

Preferably, the Small Cell comprises: a judging module, configured to determine whether the received WIFI signal strength reported by the terminal is greater than the predetermined threshold value; and a selection module, configured to use the WIFI communication to download the file when the WIFI signal strength is greater than the predetermined threshold value; and use the LTE communication to download the file when the WIFI signal strength is less than or equal to the predetermined threshold value.

As compared with the prior art, in the method of switching download mode, the control method thereof and the control system thereof according to the present disclosure, the terminal simultaneously connects to the LTE and WIFI networks, and the terminal dynamically detects the WIFI signal strength in a real-time manner and reports it to the Small Cell. When the WIFI signal strength is greater than the threshold value, the Small Cell automatically uses the WIFI network to download the file. When the WIFI signal strength is less than the threshold value, the Small Cell automatically uses the LTE network to download the file. According to the present disclosure, the LTE and WIFI networks are simultaneously connected so that the one having a better signal is used to download the file. Even if signals of the selected or default network are poor, an automatic switch can be performed to guarantee the download speed and shorten the download time.

### BRIEF DESCRIPTION OF THE DRAWINGS

Fig. 1 is a flowchart of a control method of switching file download mode according to a preferred embodiment of the present disclosure.

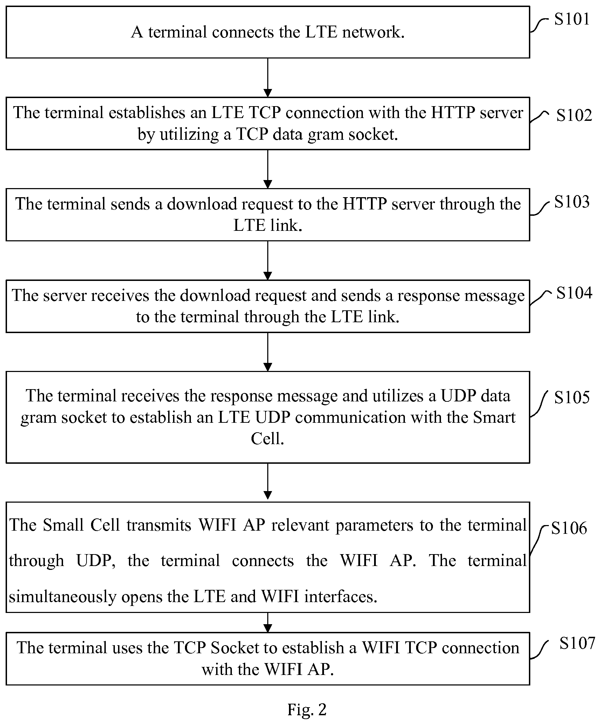

Fig. 2 is a detailed flowchart of a step S100 according to the present disclosure.
Fig. 3 is a principle diagram of a structure of a control system of switching file download mode according to the present disclosure.
Fig. 4 is a schematic diagram of a module of a control system of switching file download mode according to the present disclosure.

### DESCRIPTION OF THE EMBODIMENTS

The present disclosure proposes a control method and a control system of switching file download mode. For clarify and specify the purpose, scheme, and effect of the present disclosure, a detailed description will be disclosed by the following disclosure in conjunction with figures. However, it is understandable by persons skilled in the art that the description of the embodiments is used for understanding the invention, rather than limiting the invention.

First, the terminology in the present embodiment is described. "Small Cell" refers to a base station other than a macrocell base station, and may be a micro cell base station, a pico cell base station, or a even smaller cell base station. "LTE (Long Term Evolution)" comprises a new communication method called SAE (System Architecture Evolution) of the overall system structure of the core network. "WIFI AP (WIFI Access Point)" is an access point for WIFI (Wireless-Fidelity).

The disclosure will be further described by way of embodiments with reference to the accompanying drawings.

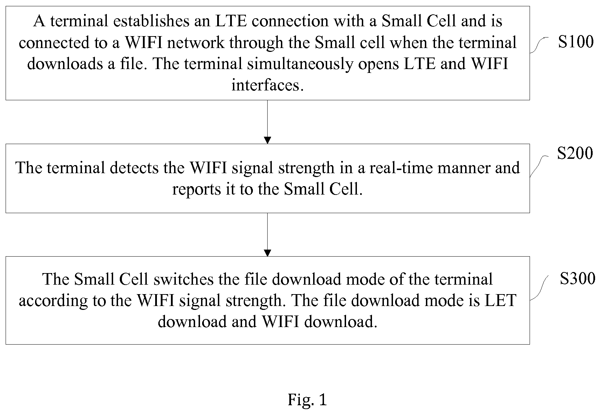

Refer to Fig. 1, Fig. 1 is a flowchart of a control method of switching file download mode according to a preferred embodiment of the present disclosure. The control method comprises:
S100: A terminal establishes an LTE connection with a Small Cell and is connected to a WIFI network through the Small cell when the terminal downloads a file. The terminal simultaneously opens LTE and WIFI interfaces.

In greater detail, when the terminal downloads the file, the terminal simultaneously connects the Small Cell and a WIFI AP (WIFI Access Point). The Small Cell binds and controls the WIFI AP. The Small Cell communicates with an HTTP server so that the terminal is connected to an LTE network and a WIFI network simultaneously. The terminal downloads the file from the HTTP server.

According to the present embodiment, a testing process may be further comprised before the terminal is simultaneously connected to the LTE network and the WIFI network. In greater detail, the terminal is tested to determine whether functions of LTE network and WIFI network are turned on or not. In the present embodiment, it may be the function of switching the file download mode. In practical applications, a switching option may be added to a "Settings" interface of the terminal, which is used to control on/off of the switching function of the file download mode. After the user turns on the option switch, it indicates that the user is allowed to use the switch download mechanism described in the present disclosure to download the file instead of using the common mode LTE network or WIFI network to download the file. In addition, during the download process, the cell phone automatically and sequentially execute the above processes in the background to download the file by using the LTE network or the WIFI network in a real-time manner according to a WIFI signal strength without user's manual operation.

Moreover, the terminal simultaneously opening the LTE and WIFI interfaces refers to that the LTE interface and the WIFI interface of the terminal are simultaneously turned on. In the present embodiment, the terminal calls Android to "connect to a high priority LTE" at a predetermined time interval so as to keep the LTE and WIFI interfaces to open simultaneously. However, this method can only be maintained for 60 seconds by default. In order to continuously keep the LTE and WIFI interfaces open at the same time, the fixed time interval needs to be less than 60 seconds. For example, the time interval may be set to call the method every 40 seconds.

In one embodiment of the present disclosure, the terminal establishing the LTE connection with the Small Cell and being connected to the WIFI network through the Small cell when the terminal downloads the file may be implemented by using the following process:
S101: the terminal connects the LTE network.

The terminal will connect to the LTE network according to a type of SIM card that is installed correspondingly. In other words, when the SIM card is a Small Cell SIM card, the cell phone will automatically connect to an LTE network of the Small Cell, rather than an LTE network of a base station. According to the present embodiment, the SIM card of the terminal is a Small Cell SIM card. "Small Cell" refers to a base station other than a macrocell base station, and may be a micro cell base station, a pico cell base station, or a even smaller cell base station.

S102: the terminal establishes an LTE TCP connection with the HTTP server by utilizing a TCP data gram socket.

In greater detail, when a user opens a web page or a client and a server corresponding to the web page or the client is the HTTP server, the terminal utilizes an Android TCP socket to establish the LTE TCP connection with the HTTP server using a domain name of the web page or the client or a port number of 80. The HTTP protocol is a TCP-based HTTP protocol. In this manner, the HTTP server is allowed to send file data to the Small Cell through an LTE link, and then the Small Cell sends the file data to the cell phone through the LTE link if and only if the WIFI signal strength is less than or equal to a predetermined threshold value.

S103: the terminal sends a download request to the HTTP server through the LTE link.

In greater detail, when the user clicks a download button on the web page or on the client side, the terminal sends a request message (GET download request) to the HTTP server through the LTE link. The server corresponding to the web page or the client is the HTTP server.

S104: the server receives the download request and sends a response message to the terminal through the LTE link.

In greater detail, the terminal receives the response message from the HTTP server through the LTE link. It indicates that the HTTP server agrees to the download request of the cell phone. In practical applications, a status code of the response message of the server may be 200, and a status code description may be "OK".

S105: the terminal receives the response message and utilizes a UDP data gram socket to establish an LTE UDP communication with the Smart Cell.

In greater detail, the terminal receives the response message and utilizes an Android UDP data gram socket to establish the LTE UDP communication with the Small Cell using an IP address of the Small Cell and a UDP port number previously agreed by both parties. The terminal serves as a UDP client. The Small Cell serves as a UDP server.

Here, the LTE UDP communication has two functions: First, the Small Cell sends a service set identifier (SSID), an encryption type and a password of the WIFI AP to the terminal; Second, the terminal sends a detection value of the WIFI signal strength (Received Signal Strength Indication) to the Small Cell.

In order to transmit the above two types of UDP information, a format of the UDP data message is shown in Table 1.

**Table 1 Format of UDP Data Message**

| Source Port Number (16 bits) | Destination Port Number (16 bits) |
|---|---|
| Length (16 bits) | Checksum (16 bits) |
| Data (Variable Length) | |

According to the present embodiment, a format of the data in the UDP data message may be shown in Table 2.

**Table 2 Format of Data in UDP Data Message**

| UDP Data Part | | | | | | | | |
|---|---|---|---|---|---|---|---|---|
| Item | Information Type | Parameter 1 Length | Parameter 1 Type | Parameter 1 Content | | Parameter N Length | Parameter N Type | Parameter N Content |
| Number of Bits | 1 bit | 8 bits | 3 bits | x bits | | 8 bits | 3 bits | x bits |

Based on the format of the data part in the UDP data message shown in Table 2, types of the UDP information and their description are shown in Table 3.

**Table 3 UDP Information Type and Description Thereof**

| Information Type | Description |
|---|---|
| 0 | Small Cell sends WIFI AP parameters to cell phone |
| 1 | Cell phone sends WIFI signal strength detection value to Small cell |

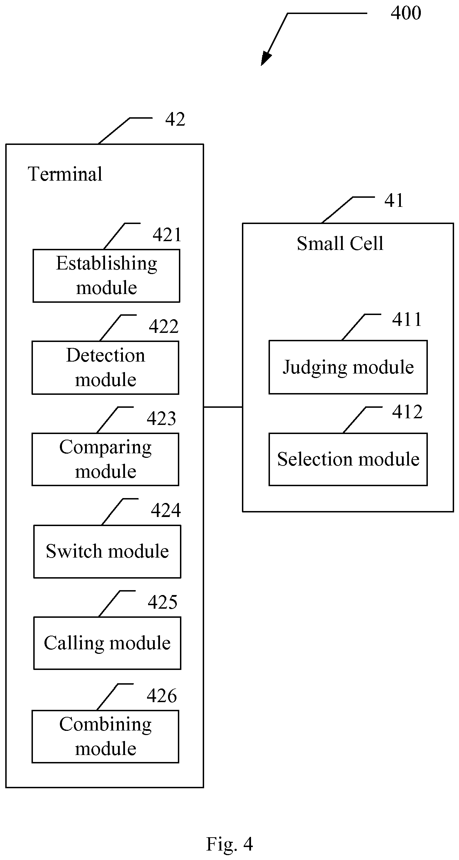

Based on the format of the data part in the UDP data message shown in Table 2 and the types of UDP parameters and their description shown in Table 3, the types of the UDP parameters and their description may be shown in Fig. 4. When the encryption type is unencrypted, the parameter content is empty correspondingly.

**Table 4 UDP Parameter Types and Their Description**

| Encryption Type | Description |
|---|---|
| 000 | WIFI AP SSID |
| 001 | Encryption Type - unencrypted |
| 010 | Encryption Type -WEP |
| 011 | Encryption Type -WPA PSK |
| 100 | Encryption Type -WPA2 PSK |
| 101 | Password (Optional) |
| 110 | WIFI signal strength detection value |

S106: The Small Cell transmits WIFI AP relevant parameters to the terminal through UDP, the terminal connects the WIFI AP. The terminal simultaneously opens the LTE and WIFI interfaces.

In greater detail, the WIFI AP and the Small Cell are bound and the WIFI AP relevant parameters are sent to the Small Cell. That is, the Small Cell will control the WIFI AP. In practical applications, the Small Cell sends the SSID, the encryption type and the password of the WIFI AP to the cell phone through the LTE UDP. After the cell phone obtains the SSID, the encryption type and the password of the WIFI AP through the UDP, the cell phone automatically scans and connects to the WIFI AP by automatically inputting the password according to the encryption type.

Based on the UDP information types and parameter types shown in Table 3 and Table 4, the UDP information of the WIFI AP parameters sent by the Small Cell to the cell phone is shown in Table 5 (for example, the name of the WIFI AP is "APtest", the encryption type is WEP, the password is "SecTest").

**Table 5 UDP Information of WIFI AP Parameters Sent by Small Cell to Cell phone**

| UDP Data Part | | | | | | | |
|---|---|---|---|---|---|---|---|
| Item | Information Type | Parameter 1 Length | Parameter 1 Type | Parameter 1 Content | Parameter 2 Length | Parameter 2 Type | Parameter 2 Convent |
| Content | 0 | 0x33 | 000 | APtest | 0x3B | 010 | SecTest |

S107: the terminal uses the TCP Socket to establish a WIFI TCP connection with the WIFI AP.

In greater detail, the terminal uses the TCP Socket to establish the WIFI TCP connection with the WIFI AP using an IP address of the WIFI AP and a TCP port number previously agreed. In this manner, when the WIFI signal strength is greater than the threshold value, the WIFI AP is allowed to send the file data to the cell phone through a WiFI link.

S200: the terminal detects the WIFI signal strength in a real-time manner and reports it to the Small Cell.

In greater detail, the terminal detects the WIFI signal strength in a real-time manner, and then the cell phone sends the WIFI signal strength to the Small Cell through the UDP. In practical applications, the terminal may send the WIFI signal strength at a fixed interval (such as one second). The terminal sends UDP information of the WIFI signal strength to the Small Cell. The UDP information may be shown in Fig. 6 (for example, the WIFI signal strength is -87dBm).

**Table 6 UDP information of WIFI Signal Strength Sent by Cell Phone to Small Cell**

| UDP Data Part | | | | |
|---|---|---|---|---|
| Item | Information Type | Parameter 1 Length | Parameter 1 Type | Parameter 1 Content |
| Conte nt | 1 | 0x0C | 110 | 101010111 |

For example, the Small Cell receives the file data sent by the HTTP server through the LTE link, and then compares the WIFI signal strength with the predetermined threshold value according to the WIFI signal strength reported by the cell phone. Based on the comparison result, the Small Cell selects whether to send the file data to the cell phone through the LTE link or the WIFI link.

S300: the Small Cell switches the file download mode of the terminal according to the WIFI signal strength. The file download mode is LET download and WIFI download.

In greater detail, when the WIFI signal strength is greater than the predetermined threshold value, the WIFI signal is strong enough. The Small Cell switches to the WIFI link to send the file data to the cell phone. When the WIFI signal strength is less than or equal to the predetermined threshold value, the WIFI signal is not strong enough. The Small Cell switches to the LTE link to send the file data to the cell phone. In particular, when the Small Cell switches to the WIFI link to send the file data to the cell phone, the Small Cell needs to perform IPinIP (that is, nested IP) encapsulation_on the file data so that the file data can be transmitted over the WIFI link.

It is worth noting that, during the file download process, the file data is sent from the Small Cell to the cell phone only through one of the LTE link and the WIFI link at any time. However, no matter to which link the Small Cell sends the file data, both an LTE TCP Socket and a WIFI TCP Socket on a terminal side keep reading the file data on the HTTP layer.

In order to be able to describe a format of an IP data message more intuitively, the format of the IP data message is shown in Table 7 according to the present embodiment.

**Table 7 Format of IP Data Message**

| | | |
|---|---|---|
| Source IP Address | Destination IP Address | Data |

When the Small Cell switches to the LTE link to send the file data to the cell phone, the format is based on the format of the IP data message shown in Table 7. When the terminal receives the IP data message from the LTE link on the IP layer, the format is shown in Fig. 8. The terminal will automatically decapsulate on the IP layer to remove a Small Cell IP address and a cell phone LTE IP address, and only a TCP data message is left and sent to the TCP layer. Then, the terminal will automatically decapsulate on the TCP layer, and a header of the TCP data message is removed and the balance is sent to the HTTP layer. Finally, the terminal obtains the file data through the LTE link on the HTTP layer, and removes a header of an HTTP response message to obtain the real file data.

**Table 8 Format of IP Data Message Received by Cell Phone on IP layer through LTE Link**

| | | |
|---|---|---|
| Small Cell IP Address | Cell Phone LTE IP Address | TCP Data Message |

In particular, when the Small Cell switches to the WIFI link to send the file data to the cell phone, the Small Cell needs to perform IPinIP (that is, nested IP) encapsulation on the file data so that the file data can be transmitted over the WIFI link. Based on the format of the IP data message shown in Table 7, a format of the IP data message from the WIFI link received by the cell phone on the IP layer is shown in Table 9.

**Table 9 Format of IP Data Message Received by Cell Phone on IP layer through WIFI Link**

| WIFI AP IP Address | Cell Phone WIFI IP Address | Pseudo TCP Data Message | | |
|---|---|---|---|---|
| | | Small Cell IP Address | Cell Phone LTE IP Address | TCP Data Message |

The terminal will automatically decapsulate on the IP layer to remove the WIFI AP IP address and the cell phone WIFI IP address, and only a pseudo TCP data message is left and sent to the TCP layer. In other words, the pseudo TCP data message comprises the Small Cell IP address, the cell phone LTE IP address, and the real TCP data message. Then, an additional processing module needs to be added when the cell phone decapsulats on the TCP layer. That is, when the format of the TCP data message received by the cell phone on the TCP layer is abnormal, the cell phone will first remove the source IP address and the destination IP address (here the description is simplified, in fact, the header of the IP data message is first removed), then automatically remove the header of the TCP data message and the balance is sent to the HTTP layer. Finally, the cell phone obtains the file data through the WIFI link on the HTTP layer, and removes the header of the HTTP response message to obtain the real file data. The terminal sequentially obtains the file data through the LTE link and the WIFI link on the HTTP layer. Since the Small Cell sends the file data sequentially, the cell phone is allowed to sequentially combine the file data on the HTTP layer, and finally complete the download of the file.

Hence, even if signals of the selected or default network are poor, an automatic switch can be performed to guarantee the download speed and shorten the download time.

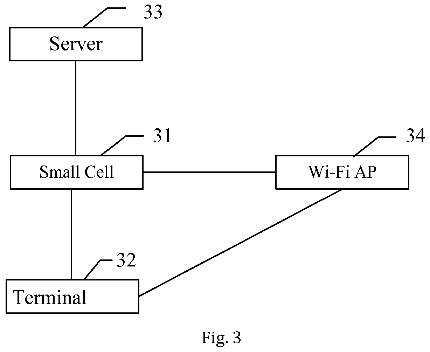

The present disclosure further provides a control system of switching file download mode. As shown in Fig. 3, the control system comprises: a terminal 32 and a Small Cell 31.

The terminal 32 establishes an LTE connection with the Small Cell 31 when the terminal 32 downloads a file, and connects a WIFI network through the Small Cell 31, and detects a WIFI signal strength in a real-time manner and reports it to the Small Cell 31. The terminal 32 simultaneously opens LTE and WIFI interfaces.

The Small Cell 31 is configured to switch a file download mode of the terminal 32 according to the WIFI signal strength. The file download mode establishes a connection with a server 33 and downloads through the LTE, and establishes a connection with a WIFI AP 34 and downloads through the WIFI.

As shown in Fig. 4, in a control system 400, a terminal 42 comprises a establishing module 421, a detection module 422, a comparing module 423, a switch module 424, a calling module 425, and a combining module 426.

The establishing module 421 is configured to establish LTE and WIFI network connections when accessible LTE and WIFI signals simultaneously exist in an environment where the terminal 42 is located.

The detection module 422 is configured to detect a WIFI signal strength in a real-time manner and report it to a Small Cell 41.

The comparing module 423 is configured to receive the WIFI signal strength reported by the terminal 42, and compare the WIFI signal strength with a predetermined threshold value.

The switch module 424 is configured to use WIFI communication to download a file when the WIFI signal strength is greater than the predetermined threshold value; use LTE communication to download the file when the WIFI signal strength is less than or equal to the predetermined threshold value.

The calling module 425 is configured to call to connect to a high priority LTE at a predetermined time interval so as to keep LTE and WIFI interfaces open simultaneously. The predetermined time interval is less than 60 seconds.

After the terminal 42 reads the file downloaded through the LTE communication and the file downloaded through the WIFI communication in a real-time manner, the combining module 426 combines the downloaded files.

The Small Cell 41 comprises a judging module 411 and a selection module 412.

The judging module 411 is configured to determine whether the received WIFI signal strength reported by the terminal 42 is greater than the predetermined threshold value; and

The selection module 412 is configured to use the WIFI communication to download the file when the WIFI signal strength is greater than the predetermined threshold value; and use the LTE communication to download the file when the WIFI signal strength is less than or equal to the predetermined threshold value.

Therefore, even if signals of the selected or default network are poor, an automatic switch can be performed to guarantee the download speed and shorten the download time.

It is understood that the system and the method disclosed in the present embodiment can be realized by other ways. The illustrated device according to the present embodiment is exemplary. For example, the separated modules are divided based on their functions. Practically, it can be realized that some units or modules disclosed in the present disclosure can be combined or integrated as another system, or some features can be ignored or unexecuted. In addition, a connection, direct couple, or communication between the units or modules, as illustrated or discussed in the present embodiments, can be through some interfaces. An indirect couple or communication between the units or modules is by means of an electrical or mechanical interface or in other manners.

The respective units illustrated in the description can be physically separated or not physically separated. The respective units illustrated in the description can be physical units or not physical units. In other words, the respective units can be integrated in a single chip or physically separated in various network units. Part or all of the units illustrated in the description are selected to realize the purpose of the present disclosure depending on the requirements of the designer.

In addition, the various functional modules may be integrated into a processing chip, or the various modules may physically exist individually, or two or more than two modules may be integrated into a module. The integrated module may be implemented by using hardware, or may be implemented by using a software functional module.

If the integrated module is implemented by using the software functional modules, it may be stored in a computer readable storage medium. The software functional modules are implemented by program instructions stored in a computer device, e.g. a laptop computer, a server, or a network device. A processor of the computer device executes the program instructions to perform steps of the method according to the embodiment of the present disclosure. The storage medium is, for example, an USB storage, an external hard drive, a read-only memory, a random access memory (RAM), a magnetic disk, or an optical disk, etc.

The present disclosure is described in detail in accordance with the above contents with the specific preferred examples. However, this present disclosure is not limited to the specific examples. For the ordinary technical personnel of the technical field of the present disclosure, on the premise of keeping the conception of the present disclosure, the technical personnel can also make simple deductions or replacements, and all of which should be considered to belong to the protection scope of the present disclosure.

## Claims

1. A method of switching download applied to a terminal, **characterized in that** the method comprises:
establishing an LTE connection with a Small Cell and connecting a WIFI network through the Small Cell by the terminal when the terminal downloads a file, wherein the terminal calls to connect to a high priority LTE so as to keep LTE and WIFI interfaces open simultaneously;
detecting a WIFI signal strength in a real-time manner and reporting the WIFI signal strength to the Small Cell; and
receiving a file download mode from the Small Cell, wherein the file download mode of the terminal is switched according to the WIFI signal strength and comprises an LET download and a WIFI download.

2. The method as claimed in claim 1, **characterized in that** the step of establishing the LTE connection with the Small Cell and connecting the WIFI network through the Small Cell by the terminal when the terminal downloads the file, comprises:
connecting an LTE network and establishing LTE UDP communication with the Small Cell through a UDP data gram socket by the terminal when downloading the file;
sending a WIFI AP to the terminal by the Small Cell; and
establishing a WIFI connection with the WIFI AP by the terminal.

3. The method as claimed in claim 2, **characterized in that** the step of connecting the LTE network and establishing the LTE UDP communication with the Small Cell through the UDP data gram socket by the terminal when downloading the file, comprises:
connecting the LTE network and sending a download request to a server through the LTE network by the terminal when the terminal downloads the file; and
receiving a response message of the download request from the server and establishing the LTE UDP communication with the Small Cell through the UDP data gram socket by the terminal.

4. The method as claimed in claim 3, **characterized in that** the step of detecting the
WIFI signal strength in a real-time manner and reporting the WIFI signal strength to the Small Cell comprises:
detecting a WIFI signal in an environment where the terminal is located in a real-time manner and sending the WIFI signal strength to the Small Cell through the LTE UDP communication by the terminal.

5. The method as claimed in claim 1, **characterized in that** the step of the file download mode of the terminal being switched according to the WIFI signal strength, comprises:
comparing the WIFI signal strength reported by the terminal with a predetermined threshold value;
using WIFI communication to download the file when the WIFI signal strength is greater than the predetermined threshold value; and
using LTE communication to download the file when the WIFI signal strength is less than or equal to the predetermined threshold value.

6. The method as claimed in claim 1, **characterized in that** after the file download mode of the terminal is switched according to the WIFI signal strength, the method further comprises:
reading the file downloaded through the LTE communication and the file downloaded through the WIFI communication in a real-time manner, and the two being combined to complete the download of the file.

7. The method as claimed in claim 1, **characterized in that** the step of the terminal calling to connect to the high priority LTE so as to keep the LTE and WIFI interfaces open simultaneously, comprises:
calling to connect to the high priority LTE built-in Android system at a predetermined time interval by the terminal so as to keep the LTE and WIFI interfaces open simultaneously, wherein the predetermined time interval is less than 60 seconds.

8. A method of controlling download switch applied to a Small Cell **characterized in that** the method comprises:
opening LTE and WIFI interfaces when a terminal downloads a file, the Small Cell establishing an LTE connection with the terminal to allow the terminal to connect to a WIFI network through the Small Cell;
receiving a WIFI signal strength reported by the terminal by the Small Cell; and
switching a file download mode of the terminal by the Small Cell according to the WIFI signal strength, wherein the file download mode comprises an LTE download and a WIFI download.

9. The method as claimed in claim 8, **characterized in that** the step of opening the LTE and WIFI interfaces when the terminal downloads the file, the Small Cell establishing the LTE connection with the terminal to allow the terminal to connect to the WIFI network through the Small Cell, comprises:
receiving a UDP data gram socket of the terminal and establishing LTE UDP communication with the terminal by the Small Cell when the terminal downloads the file; and
sending a WIFI AP to the terminal by the Small Cell to allow the terminal to establish a WIFI connection with the WIFI AP.

10. The method as claimed in claim 9, **characterized in that** the step of receiving the UDP data gram socket of the terminal and establishing the LTE UDP communication with the terminal by the Small Cell when the terminal downloads the file comprises:
receiving a download request from the terminal and sending a response message by a server;
receiving the response message and establishing the LTE UDP communication with the Small Cell through the UDP data gram socket by the terminal.

11. The method as claimed in claim 10, **characterized in that** the step of receiving the WIFI signal strength reported by the terminal by the Small Cell, comprises:
receiving the WIFI signal strength of the terminal by the Small Cell through the LTE UDP communication.

12. The method as claimed in claim 8, **characterized in that** the step of switching
the file download mode of the terminal by the Small Cell according to the WIFI signal strength, comprises:
receiving the WIFI signal strength reported by the terminal and comparing the WIFI signal strength with a predetermined threshold value by the Small Cell;
using WIFI communication to download the file when the WIFI signal strength is greater than the predetermined threshold value; and
using LTE communication to download the file when the WIFI signal strength is less than or equal to the predetermined threshold value.

13. The method as claimed in claim 8, **characterized in that** after the file download mode of the terminal is switched by the Small Cell according to the WIFI signal strength, the method further comprises:
reading the file downloaded through the LTE communication and the file downloaded through the WIFI communication by the terminal in a real-time manner, and the two being combined to complete the download of the file.

14. The method as claimed in claim 8, **characterized in that** the step of simultaneously opening the LTE and WIFI interfaces by the terminal comprises:
calling to connect to a high priority LTE at a predetermined time interval by the terminal so as to keep the LTE and WIFI interfaces to open simultaneously, wherein the predetermined time interval is less than 60 seconds.

15. A control system of controlling download switch, comprising a terminal and a Small Cell;
**characterized in that** the terminal establishes an LTE connection with the Small Cell when the terminal downloads a file, and connects a WIFI network through the Small Cell, and detects a WIFI signal strength in a real-time manner and reports the WIFI signal strength to the Small Cell, wherein the terminal simultaneously opens LTE and WIFI interfaces;
the Small Cell is configured to switch a file download mode of the terminal according to the WIFI signal strength, wherein the file download mode comprises downloading through the LTE, and downloading through the WIFI.

16. The control system as claimed in claim 15, **characterized in that** the terminal comprises: an establishing module, configured to establish the LTE connection with the Small Cell and to connect the WIFI network through the Small Cell, when the terminal downloads a file; and
a detection module, configured to detect the WIFI signal strength and report the WIFI signal strength to the Small Cell.

17. The control system as claimed in claim 15, **characterized in that** the terminal further comprises:
a comparing module, configured to receive the WIFI signal strength reported by the terminal, and compare the WIFI signal strength with a predetermined threshold value; and
a switch module, configured to use WIFI communication to download the file when the WIFI signal strength is greater than the predetermined threshold value, and to use LTE communication to download the file when the WIFI signal strength is less than or equal to the predetermined threshold value.

18. The control system as claimed in claim 15, **characterized in that** the terminal further comprises:
a calling module, configured to call to connect to a high priority LTE at a predetermined time interval so as to keep LTE and WIFI interfaces open simultaneously, wherein the predetermined time interval is less than 60 seconds.

19. The control system as claimed in claim 15, **characterized in that** the terminal further comprises:
a combining module, configured to combine the downloaded files, which are downloaded through the LTE communication and downloaded through the WIFI communication.

20. The control system as claimed in claim 15, **characterized in that** the Small Cell comprises:
a judging module, configured to determine whether the received WIFI signal strength reported by the terminal is greater than the predetermined threshold value; and
a selection module, configured to use the WIFI communication to download the file when the WIFI signal strength is greater than the predetermined threshold value; and use the LTE communication to download the file when the WIFI signal strength is less than or equal to the predetermined threshold value.
